(19) Europäisches Patentamt
European Patent Office
Office européen des brevets

(11) Veröffentlichungsnummer: **0 012 240**
**B1**

(12) **EUROPÄISCHE PATENTSCHRIFT**

(45) Veröffentlichungstag der Patentschrift: **20.01.82**

(51) Int. Cl.³: **C 25 B 3/02,** C 07 C 47/54

(21) Anmeldenummer: **79104561.0**

(22) Anmeldetag: **19.11.79**

(54) **Verfahren zur Herstellung von gegebenenfalls substituierten Benzaldehyd-dialkylacetalen.**

(30) Priorität: **30.11.78 DE 2851732**
**09.06.79 DE 2923531**
**27.07.79 DE 2930480**

(43) Veröffentlichungstag der Anmeldung: **25.06.80 Patentblatt 80/13**

(45) Bekanntmachung des Hinweises auf die Patenterteilung: **20.01.82 Patentblatt 82/3**

(84) Benannte Vertragsstaaten: **CH DE FR GB**

(56) Entgegenhaltungen:
**US-A-3 257 298**

**JOURNAL OF THE AMERICAN CHEMICAL SOCIETY, 85, 2525, 20. August 1963, «Electrochemical syntheses. The Methoxylation of Dimethoxybenzenes to Quinone Ketals and the Ring Fission of 1,2-Dimethoxybenzene to Hexamethyl cis, cis-Orthomuconate» by B. Belleau, N.L. Weinberg** →

→ **JOURNAL OF THE CHEMICAL SOCIETY, Perkin Transact. I, 1978, Seite 708, A. NILSSON et al.: «Anodic functionalisation in Synthesis. Part I. Methoxylation of Methylsubstituted Benzene and Anisole Derivatives, and the Synthesis of Aromatic Aldehydes by Anodic Oxidation» * Seite 708, Seite 715**

(73) Patentinhaber: **BAYER AG, Zentralbereich Patente, Marken und Lizenzen, D-5090 Leverkusen 1, Bayerwerk (DE)**

(72) Erfinder: **Buhmann, Hans-Rolf, Dr., Richrather Strasse 192, D-4018 Langenfeld (DE)**
Erfinder: **Arlt, Dieter, Dr., Rybnikerstrasse 2, D-5000 Köln 80 (DE)**
Erfinder: **Jautelat, Manfred, Dr., Müllersbaum 28, D-5093 Burscheid 1 (DE)**

EP 0 012 240 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von gegebenenfalls substituierten Benzaldehyddialkylacetalen

Die Erfindung betrifft ein Verfahren zur Herstellung von gegebenenfalls substituierten Benzaldehyddialkylacetalen.

Es ist bekannt, p-Methoxytoluol mit anorganischen Oxidationsmitteln, wie Permanganat oder Dichromat, zu Anisaldehyd zu oxidieren (Ullmanns Enzyklopädie der technischen Chemie, 3. Auflage, Band 14, Seite 738, Urban und Schwarzenberg, München-Berlin 1963).

Dieses Verfahren weist einige Nachteile auf: es kann mit teilweiser Weiteroxidation zur Anissäure gerechnet werden, und durch den Zwangsanfall wässriger Metallsalzlösungen ist das Verfahren eine Belastung für die Umwelt.

Es ist bekannt, Toluol in Methylenchlorid als Lösungsmittel und in Gegenwart von Methanol, einem Leitsalz und Schwefelsäure elektrochemisch zu Anisaldehyd mit 20% der theoretischen Ausbeute zu oxidieren („Tetrahedron Letters" *1978*, Seite 3723).

Es ist weiterhin bekannt, p-Methoxytoluol in Methanol als Lösungsmittel und in Gegenwart von Natriummethylat elektrochemisch zu Anisaldehyddimethylacetal zu oxidieren („J. Chem. Soc.", Perkin trans. act. I, *1978*, Seite 708). Bei dieser Arbeitsweise wird eine Methoxylierung sowohl in der Seitenkette als auch im aromatischen Kern des Ausgangsmaterials beobachtet (ibid. Seite 709).

Weiterhin ist die elektrochemische Oxidation von Hydrochinondimethyläther in Methanol als Lösungsmittel und in Gegenwart von Kaliumhydroxid zu Benzochinontetramethylketal bekannt („J. Am. Chem. Soc." *85*, 2525 (1963)), wobei ebenfalls eine Methylierung im aromatischen Kern des Hydrochinondimethyläthers beobachtet wird.

Ausserdem wird in der am Prioritätstag des erfindungsgemässen Verfahrens noch nicht publizierten EP-A Nr. 0012942 beschrieben, Benzaldehyde aus einem entsprechenden Toluol, Benzylalkohol oder Benzylester in Gegenwart einer Alkansäure durch elektrochemische Oxidation herzustellen.

Es wurde ein Verfahren zur Herstellung von gegebenenfalls substituierten Benzaldehyddialkylacetalen gefunden, das dadurch gekennzeichnet ist, dass man gegebenenfalls substituierte Toluole der Formel

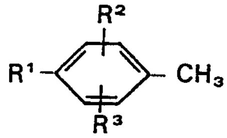

(I),

in der $R^1$ Wasserstoff, Alkyl, Aryl, Aralkyl, Alkoxy, Aryloxy oder Aralkoxy bedeutet und

$R^2$ und $R^3$ gleich oder verschieden sind und für Wasserstoff, Alkyl, Aryl oder Aralkyl stehen, gelöst in einem Alkohol der Formel

$$R^4-OH \qquad (II)$$

in der

$R^4$ Alkyl bedeutet,

und in Gegenwart eines Leitsalzes der Formel

$$R^5-A-OY \qquad (III)$$

in der

Y ein Alkalimetall, nicht substituiertes Ammonium oder teilweise oder vollständig durch Alkyl oder Benzyl substituiertes Ammonium bedeutet,

A für $-SO_2-$ oder $-\underset{\substack{|\\R^6}}{P}O-$ steht,

$R^5$ für Hydroxyl, OY oder gegebenenfalls durch Alkyl und/oder Halogen substituiertes Alkyl, Aralkyl, Aryl, Alkoxy, Aralkoxy oder Aryloxy steht und

$R^6$ für Alkoxy, Aralkoxy, Aryloxy, Hydroxyl oder OY steht,

elektrochemisch oxidiert und die entstehenden Nebenprodukte in das Ausgangsmaterial für die elektrochemische Oxidation zurückführt, wobei man die Nebenprodukte vor der Rückführung gegebenenfalls mit katalytisch angeregtem Wasserstoff behandelt.

Als Alkyl seien beispielsweise geradkettige oder verzweigte Kohlenwasserstoffreste mit 1 bis 4 Kohlenstoffatomen genannt, wie Methyl, Äthyl, Propyl, Isopropyl, Butyl oder Isobutyl. Bevorzugtes Alkyl ist Methyl.

Als Aryl seien beispielsweise aromatische Kohlenwasserstoffreste mit 6 bis 14 Kohlenstoffatomen genannt, wie Phenyl, Naphthyl oder Anthryl. Bevorzugtes Aryl ist Phenyl.

Als Aralkyl seien beispielsweise Kohlenwasserstoffreste mit 1 oder 2 Kohlenstoffatomen im aliphatischen Teil und 6 bis 14 Kohlenstoffatomen im aromatischen Teil genannt, wie Benzyl, 2-Phenyläthyl, Naphtylmethyl, 2-Naphtyläthyl, Anthrylmethyl oder 2-Anthryläthyl. Bevorzugtes Aralkyl ist Benzyl.

Als Alkoxy seien Reste genannt, die sich von einem geradkettigen oder verzweigten Alkohol mit 1 bis 4 Kohlenstoffatomen ableiten, wie Methoxy, Propoxy, Isopropyloxy, Butoxy oder Isobutyloxy. Bevorzugtes Alkoxy ist Methoxy.

Als Aryloxy seien beispielsweise Reste genannt, die sich von einer aromatischen Hydroxyverbindungen mit 6 bis 14 Kohlenstoffatomen ableiten, wie Phenoxy, Naphthyloxy oder Anthryloxy. Bevorzugtes Aryloxy ist Phenoxy.

Als Aralkoxy seien beispielsweise Reste genannt, die sich von einem araliphatischen Alkohol mit 1 oder 2 Kohlenstoffatomen im aliphatischen Teil und 6 bis 14 Kohlenstoffatomen im aromatischen Teil ableiten, wie Benzyloxy, 1-Phenyläthyloxy, 2-Phenyläthyloxy, Naphtylmethoxy, Naphthyläthoxy, Anthrylmethoxy oder Anthryläthoxy. Bevorzugtes Aralkoxy ist Benzyloxy.

Die genannten Reste, bevorzugt die gegebenenfalls enthaltenen aromatischen Kerne, können ihrerseits durch Alkyl und/oder Halogen substituiert sein. Als Alkylsubstituent sei beispielsweise Methyl, Ethyl, Propyl, Isopropyl, Butyl oder Isobutyl, bevorzugt Methyl genannt. Als Halogensubstituent sei beispielsweise Fluor, Chlor oder Brom, bevorzugt Chlor, genannt.

Als gegebenenfalls substituierte Toluole, die im erfindungsgemässen Verfahren eingesetzt werden können, seien beispielsweise genannt:

Toluol, o-, m- und p-Xylol,
Mesitylen, 1-Methyl-4-ethylbenzol,
1-Methyl-4-propylbenzol,
1-Methyl-4-isopropylbenzol,
1-Methyl-4-butylbenzol,
1-Methyl-4-isobutylbenzol,
1,2-Dimethyl-4-ethylbenzol,
2-Methyl-, 3-Methyl- und
4-Methyldiphenylmethan,
2-Methyl-, 3-Methyl- und
4-Methyldiphenyl,
p-Methoxytoluol, p-Äthoxytoluol,
p-Propoxytoluol,
p-Isopropyloxytoluol,
p-Butoxytoluol, p-Isobutyloxytoluol,
p-Phenoxytoluol, p-Benzyloxytoluol,
2-Methyl-4-methoxytoluol,
3-Methyl-4-methoxytoluol,
2,3-Dimethyl-3-methoxytoluol,
2,5-Dimethyl-4-methoxytoluol,
2,6-Dimethyl-4-methoxytoluol,
2-Phenyl-4-methoxytoluol,
3-Phenyl-4-methoxytoluol,
2-Benzyl-4-methoxytoluol,
3-Benzyl-4-methoxytoluol,
2-Phenyl-3-methyl-4-methoxytoluol,
2-Methyl-3-phenyl-4-methoxytoluol,
2-Äthyl-3-benzyl-4-phenoxytoluol,
2-Benzyl-4-benzyloxy-5-isopropyltoluol,
2,6-Dibutyl-4-benzyloxytoluol,
1-Methyl-4-(t-butyl)benzol.

Als Alkohole der Formel (II) seien beispielsweise genannt: Methanol, Ethanol, Propanol, Isopropanol, Butanol oder Isobutanol, bevorzugt Methanol.

Das Kation Y des Leitsalzes, bei mehrwertigen Säuren die Kationen, können beispielsweise ein Alkalimetall, das nichtsubstituiertes Ammonium oder ein teilweise oder vollständig durch Alkyl oder Benzyl substituiertes Ammonium sein.

Als Alkalimetalle seien beispielsweise Lithium, Natrium, Kalium, Rubidium oder Cäsium genannt. Bevorzugtes Alkalimetall ist Natrium oder Kalium.

Als teilweise oder vollständig durch Alkyl oder Benzyl substituiertes Ammonium sei beispielsweise genannt: Methylammonium, Dimethylammonium, Trimethylammonium, Tetramethylammonium, Ethylammonium, Diethylammonium, Triethylammonium, Tetraethylammonium, Dimethylethylammonium, Propylammonium, Dipropylammonium, Tripropylammonium, Tetrapropylammonium, Butylammonium, Dibutylammonium, Tributylammonium, Tetrabutylammonium, Dimetylbutylammonium, Dimethyldibutylammonium, Benzylammonium, Dibenzylammonium, Dimethylbenzylammonium, Diethylbenzylammonium, Dibutylbenzylammonium, Dimethyldibenzylammonium, Diethyldibenzylammonium.

Bevorzugte Kationen für das Leitsalz (III) sind die Tetraalkylammoniumkationen.

Die Gruppe A der Formel (III) kann für

$-SO_2-$ oder $-\underset{\substack{|\\ R^6}}{P}O-$

stehen. Das Leitsalz des erfindungsgemässen Verfahrens kann sich also von einer Säure des 6-wertigen Schwefels oder des 5-wertigen Phosphors ableiten.

Als Säure, die sich vom 6-wertigen Schwefel ableitet, sei beispielsweise die Schwefelsäure, eine Alkyl-, Aralkyl- oder Arylsulfonsäure oder ein Schwefelsäuremonoester genannt, wobei die Estergruppe sich von einem aliphatischen oder araliphatischen Alkohol oder einem Phenol ableitet.

Unter die Formel (III) fallen demzufolge Leitsalze der Formel

$$R^5 - A' - OY \qquad (IV),$$

in der

$R^5$ und Y die oben angegebene Bedeutung haben und A' für $-SO_2-$ steht.

Als Anion für das Leitsalz, das sich von einer Säure des 6-wertigen Schwefels ableitet, sei beispielsweise genannt: das Hydrogensulfat, das bereits durch ein Kation der genannten Art neutralisierte Sulfat, das Methylsulfonat, Ethylsulfonat, Propylsulfonat, Butylsulfonat, Benzylsulfonat, Benzolsulfonat, p-Toluolsulfonat, o-Chlor-p-toluolsulfonat, 2,4-Dichlorbenzolsulfonat, 2-Brom-4-methylbenzolsulfonat, Naphthyl-1-sulfonat, Naphtyl-2-sulfonat, das Methylestersulfat, Ethylestersulfat, Propylestersulfat, Butylestersulfat, Benzylestersulfat, Phenylestersulfat, p-Tolylestersulfat, p-Chlorphenylestersulfat. Bevorzugte Anionen von Säuren des 6-wertigen Schwefels sind Methylsulfonat, Ethylsulfonat, Benzolsulfonat, p-Toluolsulfonat, 2,4-Xylolsulfonat, o-Chlorbenzolsulfonat, m-Chlorbenzolsulfonat, p-Chlorbenzolsulfonat, 2,4-Dichlorbenzolsulfonat, Methylestersulfat, Ethylestersulfat. Besonders bevorzugte Anionen von Säuren des 6-wertigen Schwefels sind Benzolsulfonat, p-Toluolsulfonat, p-Chlorbenzolsulfonat, Methylestersulfat.

Als Säure, die sich vom 5-wertigen Phosphor ableitet, sei beispielsweise die Phosphorsäure, eine Alkyl-, Arlakyl- oder Arylphosphonsäure, ein Phosphorsäuremonoester oder -diester oder ein Phosphonsäuremonoester genannt, wobei die Estergruppen sich von einem aliphatischen oder araliphatischen Alkohol oder von einem Phenol ableiten.

Unter die Formel (III) fallen demzufolge auch Leitsalze der Formel

$$R^5 - A'' - OY \qquad (V),$$

in der

A'' für $-\underset{\substack{|\\ R^6}}{P}O-$ steht und

$R^5$, $R^6$ und Y die angegebene Bedeutung haben.

Als Anion für das Leitsalz, das sich von einer Säure des 5-wertigen Phosphors ableitet, sei beispielsweise das Phosphat,

das Hydrogenphosphat,
das Dihydrogenphosphat,
das Methylphosphat,
Ethylphosphonat,
Propylphosphonat, Butylphosphonat,
Phenylphosphonat,
Benzylphosphonat,
p-Chlorbenzolphosphonat,
Methylphosphonatmethylester,
Methylphosphonatethylester,
Ethylphosphonatethylester,
Propylphosphonatmethylester,
Phenylphosphonatmethylester,
Benzylphosphonatmethylester,
p-Chlorbenzolphosphonatmethylester,
Methylesterphosphat,
Ethylesterphosphat,
Propylesterphosphat,
Phenylesterphosphat,
Benzylesterphosphat,
Dimethylesterphosphat,
Diethylesterphosphat,
Methylethylesterphosphat,
Dipropylesterphosphat,
Diphenylesterphosphat,
Dibenzylesterphosphat,
Phenylmethylesterphosphat,
Di(p-Toluyl)esterphosphat,
Di(p-Chlorbenzol)esterphosphat.

Die bevorzugten Anionen von einer Säure des 5-wertigen Phosphors leiten sich von der zweifach veresterten Phosphorsäure oder der einfach veresterten Phosphonsäure ab, beispielsweise Diphenylesterphosphat,
Di(p-Toluyl)esterphosphat,
Di(p-Chlorbenzolester)phosphat,
Dimethylesterphosphat,
Diethylesterphosphat,
Methylphosphonatmethylester,
Methylphosphonatethylester,
Ethylphosphonatethylester,
Phenylphosphonatmethylester,
p-Chlorphenylphosphonatmethylester.

Bevorzugte Leitsalze für das erfindungsgemässe Verfahren sind Tetraalkylammoniumsalze der Formel

$$R^7 - B - O - N\,(Alkyl)_4 \qquad (VI),$$

in der

B für $-SO_2-$ oder $-\underset{R^8}{\underset{|}{P}}O-$ steht,

$R^7$ Methyl, Ethyl, Methoxy, Ethoxy oder gegebenenfalls durch Alkyl und/oder Halogen substituiertes Phenyl bedeutet und

$R^8$ für Methoxy oder Ethoxy steht.

Unter die Formel (VI) fallen Leitsalze der Formel

$$R^7 - B' - O - N(Alkyl)_4 \qquad (VII),$$

in der

$R^7$ die angegebene Bedeutung hat und

B' für $-SO_2-$ steht.

Unter die Formel (VI) fallen weiterhin Leitsalze der Formel

$$R^7 - B'' - O - N(Alkyl)_4 \qquad (VIII),$$

in der

B'' für $-\underset{R^8}{\underset{|}{P}}O-$ steht und

$R^7$ und $R^8$ die angegebene Bedeutung haben.

Als bevorzugte Leitsalze seien beispielsweise genannt: Tetramethylammoniumbenzolsulfonat,
Tetraethylammonium-p-toluolsulfonat,
Tetrabutylammonium-p-toluolsulfonat,
Trimethylbutylammonium-o-chlorbenzolsulfonat,
Tetraethylammonium-2,4-dichlorbenzolsulfonat,
Dimethyldipropylammonium-p-chlorbenzolsulfonat,
Tetramethylammonium-2,4-dichlorbenzolsulfonat,
Tetramethylammoniummethylestersulfat,
Tetraethylammoniumethylestersulfat,
Tetramethylammoniumdimethylphosphat,
Tetraethylammoniumdiethylphosphat,
Triethylmethylammoniumdimethylphosphat,
Tetramethylammoniummethylphosphonatmethylester,
Tetramethylammoniumethylphosphonatmethylester.

Die Konzentration des Leitsalzes im erfindungsgemässen Verfahren beträgt beispielsweise 0,01 bis 2 mol pro Liter, bevorzugt 0,05 bis 0,5 mol pro Liter.

Die Konzentration des substituierten Toluols in der alkoholischen Lösung kann im erfindungsgemässen Verfahren beispielsweise 1 bis 50 Gew.%, bevorzugt 10 bis 30 Gew.%, betragen.

Das erfindungsgemässe Verfahren kann im Temperaturbereich von −20 bis +60°C, bevorzugt von +10 bis +40°C, durchgeführt werden.

Das erfindungsgemässe Verfahren kann in einer üblichen und dem Fachmann bekannten Elektrolyseapparatur an oxidationsstabilen Anoden durchgeführt werden, beispielsweise an Anoden aus Graphit, Bleidioxid, einem Metall der Platingruppe, einer Legierung aus Metallen der Platingruppe oder an Metallen die einen Überzug aus einem Platinmetall tragen. Bevorzugt sind Anoden aus Graphit, Platin oder platiniertem Titan.

Als Katodenmaterial sei beispielsweise Kupfer, Nickel, Stahl, Platin oder Graphit, in bevorzugter Weise Stahl, genannt.

Im erfindungsgemässen Verfahren wird als Elektrolyseabgas reiner Wasserstoff gebildet, so dass ausser einer Spülung der Apparatur mit Inertgas vor Inbetriebnahme keine zusätzlichen Massnahmen zum Schutz vor einer Knallgasbildung notwendig sind.

Gegebenenfalls kann es zweckmässig sein, eine schwer oxidierbare Base im erfindungsgemässen Verfahren einzusetzen, um ein Absinken des pH-Wertes auf Werte kleiner als 7 zu verhindern. Hierfür seien beispielsweise Collidin oder 2,6-Lutidin in einer Menge von 0,01 bis 2 Gew.%, bevorzugt 0,05 bis 1 Gew.%, bezogen auf die Gesamtmenge des Elektrolyten, genannt.

Die Stromdichten im erfindungsgemässen Verfahren können beispielsweise von 0,1 bis 50 A/

dm², bevorzugt von 1 bis 20 A/dm² gewählt werden.

Die Zellenspannung stellt sich in Abhängigkeit von der Zusammensetzung des Elektrolyten, der Temperatur und der Geometrie der Einzelzelle ein. Sie kann beispielsweise Werte von 4 bis 12 V pro Einzelzelle annehmen.

Im erfindungsgemässen Verfahren können gegebenenfalls substituierte Benzaldehyddialkylacetale der Formel

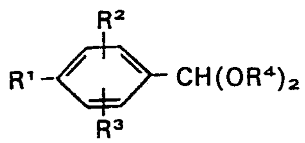

(IX)

in der

$R^1$ bis $R^4$ die obengenannte Bedeutung haben,

hergestellt werden, beispielsweise

p-Methoxybenzaldehyddimethylacetal,
p-Methoxybenzaldehyddiethylacetal,
p-Methoxybenzaldehyddipropylacetal,
p-Methoxybenzaldehyddibutylacetal,
p-Ethoxybenzaldehyddimethylacetal,
p-Ethoxybenzaldehyddiethylacetal,
p-Propoxybenzaldehyddimethylacetal,
p-Butoxybenzaldehyddimethylacetal,
p-Phenoxybenzaldehyddimethylacetal,
p-Phenoxybenzaldehyddiisopropylacetal,
p-Benzyloxybenzaldehyddimethylacetal,
p-Benzyloxybenzaldehyddiisobutylacetal,
2-Methyl-4-methoxybenzaldehyddimethylacetal,
3-Methyl-4-methoxybenzaldehyddiethylacetal,
2,5-Dimethyl-4-methoxybenzaldehyddimethylacetal,
2,6-Dimethyl-4-phenoxybenzaldehyddimethylacetal,
2-Methyl-4-methoxy-5-phenylbenzaldehyddimethylacetal,
2-Benzyl-4-phenoxy-5-isopropylbenzaldehyddiethylacetal,
2-Ethyl-3-benzyl-4-methoxybenzaldehyddimethylacetal,
Benzaldehyddimethylacetal,
2-Methylbenzaldehyddimethylacetal,
3-Methylbenzaldehyddimethylacetal,
4-Methylbenzaldehyddimethylacetal,
3,5-Dimethylbenzaldehyddimethylacetal,
4-Ethylbenzaldehyddimethylacetal,
4-(n-Propyl)benzaldehyddimethylacetal,
4-(i-Propyl)benzaldehyddimethylacetal,
4-(n-Butyl)benzaldehyddimethylacetal,
4-(i-Butyl)benzaldehyddimethylacetal,
4-(t-Butyl)benzaldehyddimethylacetal,
4-Phenylbenzaldehyddimethylacetal,
4-(4'-Methyl)biphenylaldehyddimethylacetal,
4-(4'-Methoxy)biphenylaldehyddimethylacetal,
4-Benzylbenzaldehyddimethylacetal.

Im erfindungsgemässen Verfahren treten Nebenprodukte auf, die die Ausbeute an dem gewünschten Hauptprodukt beeinträchtigen. Diese Nebenprodukte können aus dem Reaktionsgemisch der elektrochemischen Oxidation, beispielsweise durch Destillation, isoliert werden. Diese Nebenprodukte werden erfindungsgemäss in das Ausgangsprodukt für die elektrochemische Oxidation zurückgeführt. Hierbei kann so vorgegangen werden, dass bei der Auftrennung des Reaktionsgemisches das gegebenenfalls noch vorhandene Ausgangsprodukt, die Nebenprodukte, sowie das gewünschte Verfahrensprodukt getrennt aufgefangen werden. Sodann können die Nebenprodukte, sowie das Ausgangsprodukt in die elektrochemische Oxidation zurückgeführt werden. Es ist jedoch auch möglich, bei der Auftrennung des Reaktionsgemisches, beispielsweise durch Destillation, neben dem gewünschten Verfahrensprodukt nur eine einzige Fraktion aufzufangen, die die Nebenprodukte, das unveränderte Ausgangsprodukt sowie etwas Endprodukt enthält, und diese Fraktion ohne weitere Reinigung und ohne weitere Auftrennung in die Einzelkomponenten in das Ausgangsmaterial für die elektrochemische Oxidation zurückzuführen. Diese letztere Verfahrensvariante ist bevorzugt.

Die genannten Nebenprodukte können Anteile enthalten, die bei einer blossen Rückführung in das Ausgangsmaterial für die elektrochemische Oxidation ohne weitere Behandlung nicht zu einer Erhöhung der Ausbeute beitragen, die aber bei einer geeigneten Vorbehandlung vor der Rückführung in das Ausgangsmaterial zusätzlich zu den obengenannten Nebenprodukten ebenfalls eine Ausbeutesteigerung hervorrufen. Solche Anteile können beispielsweise entstehen, wenn Toluole der Formel (I) eingesetzt werden, in denen der Substituent $R^1$ Wasserstoff, Alkyl, Aralkyl oder Aryl bedeutet und wenn ein Leitsalz verwendet wird, das sich von einer Säure des 5-wertigen Phosphors ableitet. Als geeignete Behandlung dieser Anteile der Nebenprodukte sei beispielsweise eine Behandlung mit katalytisch angeregtem Wasserstoff genannt.

Beim Auftreten solcher Nebenproduktanteile, die eine Behandlung vor der Rückführung erfordern, können beispielsweise folgende Varianten des erfindungsgemässen Verfahrens angewandt werden:

a) Falls der Anteil an Nebenprodukten, die nach einer Behandlung durch Hydrierung zur Ausbeutesteigerung beitragen, sehr klein ist im Verhältnis zu den bereits oben beschriebenen Nebenprodukten, kann auf eine Hydrierung verzichtet werden, und die Gesamtmenge der Nebenprodukte unmittelbar in das Ausgangsmaterial für die elektrochemische Oxidation zurückgeführt werden. Zur Vermeidung einer Anreicherung an Nebenproduktanteilen, die eine Hydrierung erforderlich machen würden, kann es günstig sein, einen Teil des Nebenproduktgemisches vor der Zurückführung in das Ausgangsmaterial auszuschleusen und in geeigneter Weise zu vernichten.

b) In einer weiteren Verfahrensvariante kann so vorgegangen werden, dass das Nebenproduktgemisch in seine Bestandteile aufgetrennt wird, beispielsweise durch Destillation, und die einzelnen

Bestandteile des Nebenproduktgemisches getrennt in das Ausgangsmaterial zurückgeführt werden. Hierbei können die Nebenproduktanteile, bei denen festgestellt wurde, dass sie ohne hydrierende Behandlung zu einer Ausbeutesteigerung beitragen, direkt in das Ausgangsgemisch zurückgeführt werden, während jene Nebenproduktanteile, bei denen festgestellt wurde, dass sie erst nach hydrierender Vorbehandlung zu einer Ausbeutesteigerung beitragen, dieser hydrierenden Vorbehandlung unterworfen werden.

c) In einer weiteren Variante des erfindungsgemässen Verfahrens wird bei der Auftrennung des Reaktionsgemisches, beispielsweise bei der destillativen Auftrennung des Reaktionsgemisches wie oben beschrieben, aus der elektrochemischen Reaktion nur ein einziger Vorlauf vor dem Gewünschten Hauptprodukt abgenommen. Dieser Vorlauf enthält sodann etwas von dem nicht umgesetzten Ausgangsmaterial, alle Nebenproduktanteile sowie gegebenenfalls etwas von dem gewünschten Hauptprodukt. Der gesamte Vorlauf wird sodann der hydrierenden Behandlung unterworfen und danach in das Ausgangsmaterial für die elektrochemische Oxidation zurückgeführt. Überraschenderweise werden alle Komponenten des genannten Vorlaufs, die keine hydrierende Vorbehandlung vor der Rückführung in das Ausgangsmaterial für die elektrochemische Rekation brauchen, durch hydrierende Vorbehandlung nicht verändert. Wegen der Einfachheit ist diese letzte Variante bevorzugt.

Die hydrierende Behandlung der Nebenprodukte, sowohl einzeln als auch im Gemisch mit etwas Ausgangsprodukt und etwas Hauptprodukt, wie beschrieben, wird erfindungsgemäss durch Behandlung mit Wasserstoff in Gegenwart eines Hydrierkatalysators, in einem Alkohol als Lösungsmittel bei einer Temperatur von etwa 0°C bis zum Siedepunkt des Alkohols bei Normaldruck oder erhöhtem Druck durchgeführt.

Als Hydrierkatalysatoren kommen übliche und dem Fachmann bekannte Hydrierkatalysatoren in Frage. Als solche seien beispielsweise genannt:

Edelmetallkatalysatoren, wie feinverteiltes Platin oder Palladium; Edelmetalloxidkatalysatoren, die erst im Hydriergemisch durch den Hydrierwasserstoff reduziert werden; Raneykatalysatoren, wie Raneynickel, Raneynickeleisen, Raneynickelkupfer, Raneynickelkobalt, Oxid- oder Sulfidkatalysatoren, wie Kupferchromoxid, Zinkchromoxid, Molybdänsulfid oder Wolframsulfid. Die Katalysatoren können mit oder ohne Trägersubstanz angewendet werden. Als Trägersubstanz seien beispielsweise Kohle, Siliciumdioxid, Aluminiumoxid, Erdalkalisulfate, Erdalkalioxide und Erdalkalicarbonate genannt.

Als Hydrierkatalysatoren seien besonders die Edelmetallkatalysatoren, beispielsweise Platin oder Palladium, gegebenenfalls auf einem Trägermaterial, genannt. Besonders bevorzugt als Hydrierkatalysator ist Palladium auf Magnesiumoxid/Kieselgur.

Die erfindungsgemässe Hydrierung der Nebenprodukte wird in der Lösung eines niederen Alkohols, wie Methanol, Ethanol, Propanol oder Butanol, durchgeführt. Die durch Hydrierung behandelten Nebenprodukte können dann beispielsweise durch Destillation von dem bei der Hydrierung angewandten Alkohol getrennt werden. Bevorzugt wird jedoch der gleiche Alkohol $R^4OH$ der Formel (II) zur Hydrierung verwendet, wie der zur Durchführung der elektrochemischen Oxidation des erfindungsgemässen Verfahrens. Die durch Hydrierung behandelten Nebenprodukte können sodann in bevorzugter Weise in Form ihrer Lösung in dem Alkohol $R^4OH$ (II) in die elektrochemische Oxidation zurückgeführt werden.

Als Temperatur für die Durchführung der Hydrierung sei eine solche von etwa 0°C bis zum Siedepunkt des als Lösungsmittel eingesetzten Alkohols genannt. Bevorzugt ist eine Temperatur von etwa 15 bis 40°C.

Die erfindungsgemässe Hydrierung der Nebenprodukte kann bei Normaldruck oder bei erhöhtem Druck ausgeführt werden. Als erhöhter Druck sei ein Druck von bis zu 200 bar genannt. In einer bevorzugten Variante wird der bei der Elektrolyse katodisch anfallende Wasserstoff für die Hydrierung der Nebenprodukte benutzt. Bei dieser bevorzugten Variante ist das Arbeiten unter Normaldruck bevorzugt.

Das erfindungsgemässe Verfahren der elektrochemischen Oxidation kann sowohl diskintinuierlich als auch kontinuierlich durchgeführt werden. Bei Anwendung der kontinuierlichen Arbeitsweise kann beispielsweise das gesamte Reaktionsgemisch, das die Elektrolyseapparatur verlässt, kontinuierlich aufgearbeitet werden, wobei man die Fraktion, die die Nebenprodukte enthält, gegebenenfalls nach Behandlung mit katalytisch angeregtem Wasserstoff, in das Ausgangsmaterial für die elektrochemische Reaktion zurückführt. Bei kontinuierlicher Arbeitsweise kann jedoch auch das Elektrolysegemisch im Kreislauf durch die Elektrolyseapparatur geführt werden, wobei hinter der Elektrolyseapparatur nur ein Teil des Reaktionsgemisches entnommen und aufgearbeitet wird und wobei die Fraktion, die die Nebenprodukte enthält, gegebenenfalls nach Behandlung mit katalytisch angeregtem Wasserstoff, vor der Elektrolyseapparatur in das dort eingesetzte Ausgangsmaterial für die elektrochemische Oxidation zurückgeführt wird. Das Ausangsmaterial besteht hierbei ausser der erfindungsgemäss zurückgeführten Fraktion mit den Nebenprodukten aus dem gegebenenfalls substituierten Toluol nach Massgabe seines Verbrauchs, aus dem als Lösungsmittel eingesetzten Alkohol und dem Leitsalz. Der Alkohol und das Leitsalz können, zumindest teilweise, der Alkohol und das Leitsalz sein, die bei der Aufarbeitung eines Teils des Reaktionsgemisches anfallen.

Das erfindungsgemässe Verfahren kann auch in hintereinander geschalteten Elektrolysezellen nach Art einer Kaskade durchgeführt werden.

Es wurde weiterhin gefunden, dass durch eine Erniedrigung der Stromdichte an den Elektroden die Selektivität des erfindungsgemässen Verfahrens gesteigert werden kann. Um die hohe Raum-Zeit-Ausbeute einer hohen Stromdichte und die hohe Selektivität einer niedrigen Stromdichte zu vereinen, kann man daher in einer weiteren Variante des erfindungsgemässen Verfahrens die Stromdichte im Verlaufe der elektrochemischen Oxidation erniedrigen. Bei der Kaskadenschaltung mehrerer Elektrolysezellen kann beispielsweise die Stromdichte in der ersten Elektrolysezelle am höchsten sein und in der jeweils folgenden Zelle etwas erniedrigt werden.

Das erfindungsgemässe Verfahren kann am Beispiel der Umsetzung von p-Methoxytoluol (p-Methylanisol) in methanolische Lösung zu p-Methoxybenzaldehyddimethylacetal (Anisaldehyddimethylacetal) durch die folgende Gleichung erläutert werden:

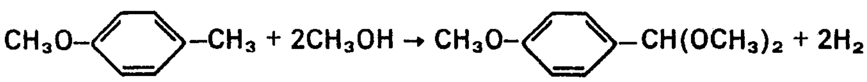

Das erfindungsgemässe Verfahren kann beispielsweise wie folgt durchgeführt werden:

Der Elektrolyt wird durch Auflösen des gegebenenfalls substituierten Toluols und des Leitsalzes in dem gewünschten Alkohol hergestellt. Gegebenenfalls kann es günstig sein, die säureempfindlichen Acetale durch den an sich bekannten Zusatz einer oxidationsstabilen Base, beispielsweise Collidin oder Lutidin, zu schützen. Der Elektrolyt wird bis zu dem gewünschten Umsetzungsgrad, beispielsweise 60 bis 90% des theoretischen Umsetzungsgrades, gegebenenfalls unter Absenkung der Stromdichte im Verlaufe der elektrochemischen Reaktion, elektrolysiert. Nach der Elektrolyse wird der überschüssige Alkohol abdestilliert und das kristallin ausgefallene Leitsalz abfiltriert. Das gegebenenfalls substituierte Benzaldehyddialkylacetal kann dann durch übliche Aufarbeitungsmethoden, beispielsweise durch Destillation, aus dem Reaktionsgemisch erhalten werden. Die Nebenprodukte der elektrochemischen Oxidation werden bei der Abtrennung des gewünschten Endproduktes bei Anwendung einer destillativen Trennung im allgemeinen im Vorlauf vor dem Endprodukt gehalten. Dieser Vorlauf, der nicht umgesetztes Ausgangsprodukt, die Nebenprodukte, sowie etwas Endprodukt enthält, wird dann in bevorzugter Weise ohne weitere Auftrennung, gegebenenfalls nach hydrierender Vorbehandlung in das Ausgangsmaterial für die elektrochemische Reaktion zurückgeführt.

Bei kontinuierlicher Durchführung des erfindungsgemässen Verfahrens wird der Elekrtolyt durch die Elektrolyseapparatur gepumpt. Nach Verlassen der Elektrolyseapparatur wird das Reaktionsgemisch ganz oder teilweise durch Destillation in einen Vorlauf und in das gebildete Benzaldehyddialkylacetal aufgetrennt. Der Vorlauf wird sodann in das Ausgangsmaterial für die elektrochemische Oxidation zurückgeführt, wobei gegebenenfalls vorher eine hydrierende Behandlung vorgenommen wird. Das Toluol der Formel (I) als Ausgangsprodukt wird im Elektrolyten nach Massgabe seines Verbrauchs ergänzt. Falls bei kontinuierlicher Rekationsführung nur ein Teil des Reaktionsgemisches nach Verlassen der Elektrolyseapparatur entnommen wird, wird das restliche Reaktionsgemisch im Kreise geführt und durch den Vorlauf oder dem einer hydrierenden Behandlung unterworfenen Vorlauf, der die Nebenprodukte enthält, sowie durch Toluol als Ausgangsverbindung nach Massgabe seines Verbrauchs ergänzt.

Benzaldehyddialkylacetale der Formel (IX) sind wertvolle Zwischenprodukte und können beispielsweise in Gegenwart verdünnter Säuren zu den entsprechenden Benzaldehyden hydrolisiert werden. Substituierte Benzaldehyde sind beispielsweise wertvolle Riechstoffkomponenten („Ullmann's Enzyklopädie der technischen Chemie", 3. Auflage, Band 14, Seite 738, Urban und Schwarzenberg, München-Berlin, 1968). Unter Berücksichtigung der Weiterverarbeitung der Benzaldehyddialkylacetale zu gegebenenfalls substituierten Benzaldehyden kann die Aufarbeitung des Elektrolyten gegebenenfalls auch in der Art erfolgen, dass nicht das substituierte Benzaldehyddialkylacetal, sondern der freie substituierte Benzaldehyd isoliert wird, der in bekannter Weise durch saure Hydrolyse erhalten werden kann.

Man geht hierzu zweckmässigerweise so vor, dass der Elektrolyt nach Beendigung der Oxidation auf seinen Gehalt an substituiertem Benzaldehyddialkylacetal geprüft wird und die diesem äquivalente Menge Wasser zugefügt wird. An einem sauren Ionenaustauscher oder durch Zufügen einer Säure, beispielsweise p-Toluolsulfonsäure, wird dann aus dem Benzaldehyddialkylacetal der zugehörige Aldehyd durch Hydrolyse freigesetzt. Man filtriert das Hydrolysegemisch sodann vom sauren Katalysator ab bzw. neutralisiert die zugefügte Säure und arbeitet in der Weise auf, dass das Methanol abdestilliert wird, vom ausgefallenen Leitsalz abfiltirert wird und das verbleibende Gemisch, beispielsweise durch Destillation, zu dem gewünschten Benzaldehyd aufgearbeitet wird.

Im erfindungsgemässen Verfahren können die Benzaldehyddialkylacetale der Formel (IX) in technisch fortschrittlicher Weise durch eine einstufige elektrochemische Oxidation mit hoher Selektivität und in hoher Reinheit hergestellt werden. Durch die erfindungsgemässe Rückführung der Nebenprodukte, gegebenenfalls nach hydrierender Behandlung, werden hohe Material- und Stromausbeuten erreicht.

Es ist ausserordentlich überraschend, dass unter den Bedingungen des erfindungsgemässen Verfahrens keine Substitution des aromatischen Kerns der eingesetzten Toluole durch die Alkoxygruppe des verwendeten Alkohols eintritt und dass eine Weiteroxidation zum substituierten Benzoesäureorthoester nicht beobachtet wird, wie dies nach dem Stand der Technik zu erwarten war („J. Am. Chem. Soc." *85*, 252 (1963)). Weiterhin ist es

überraschend, dass die speziell bei Graphitanoden beobachtete oxidative Dimerisierung von Seitenketten enthaltenden Aromaten (Fritz Beck, „Elektroorganische Chemie", Seite 242 und 249, Verlag Chemie, Weinheim 1974) fast völlig unterdrückt wird. Überraschend ist ebenfalls, dass neben gegebenenfalls substituierten Toluolen, die in para-Stellung zur Methylgruppe eine Ethergruppe haben, auch solche, die in para-Stellung zur Methylgruppe ein Wasserstoffatom oder eine Alkyl-, Aryl oder Aralkylgruppe tragen, elektrochemisch zu den zugehörigen Benzaldehyddialkylacetalen oxidiert werden können, da das bekannte, wesentlich höhere Halbwellen-Potential der zuletzt genannten Verbindungen gegenüber Verbindungen, die in para-Stellung zur Methylgruppe eine Ethergruppe tragen, ein starkes Auftreten von Nebenreaktionen, beispielsweise der elektrochemischen Oxidation des eingesetzten Alkohols, erwarten liess. So beträgt beispielsweise das Halbwellenpotential des Toluols 1,9 Volt gegenüber dem des p-Methoxytoluols mit 1,2 Volt („Tetrahedron Letters", *1978*, Seite 3725).

*Beispiel 1:*

20 g (164 mmol) p-Methoxytoluol, gelöst in 70 ml Methanol, das 1 ml Collidin und 5 g Tetraäthylammonium-p-toluolsulfonat gelöst enthält, werden an einer Graphitanode bei einer Stromdichte von 10 A/dm² und einer Temperatur von 25°C bis zum Verbrauch von 0,6 F elektrolysiert. Man engt den Elektrolyten im Wasserstrahlvakuum ein, destilliert den Rückstand und erhält 23 g Rohprodukt mit einem Siedebereich von 70 bis 120°C, das nach gaschromatographischer Analyse 81,5% = 18,7 g = 103 mmol Anisaldehyddimethylacetal sowie etwas Ausgangs- und Nebenprodukt, die in die elektrochemische Oxidation zurückgeführt werden, enthält. Daraus errechnet sich eine Stoffausbeute von 67% und eine Stromausbeute von 71%, bezogen auf die theoretischen Ausbeuten.

*Beispiel 2:*

Eine Lösung von 29,6 g (0,2 mol) p-(t-Butyl)toluol in einem Elektrolyten, bestehend aus 75 ml Methanol, 3 g Tetraethylammonium-p-methylbenzolsulfonat und 2 ml Collidin wird an einer Graphitanode bei einer Stromdichte von 8 A/dm² und einer Temperatur von 25°C bis zum Verbrauch von 0,6 F oxidiert. Man destilliert das Methanol ab, saugt vom ausgefallenen Leitsalz ab und isoliert durch Destillation 30,5 g Produktgemisch, das durch fraktionierte Destillation aufgetrennt wird. Man erhält hierbei einen Vorlauf, der Collidin, Ausgangsprodukt und die Nebenprodukte enthält, vor dem p-(t-Butyl)benzaldehyddimethylacetal. Der Vorlauf wird in die elektrochemische Oxidation zurückgeführt. Hieraus ergibt sich eine Ausbeute von 55% der theoretischen Ausbeute an p-(t-Butyl)benzaldehyddimethylacetal, Kp. $_{0,1}$:65°C.

*Beispiel 3:*

21,2 g (0,2 mol) p-Xylol, gelöst in einem Elektrolyten aus 70 ml Methanol, 5 g Tetraethylammonium-p-methylbenzolsulfonat und 0,5 ml Collidin werden an einer Graphitanode bei einer Temperatur von 25°C und einer Stromdichte von 10 A/dm² bis zum Verbrauch von 0,7 F elektrolysiert. Man destilliert das Methanol ab, saugt vom ausgefallenen Leitsalz ab, isoliert durch Destillation 24 g Produktgemisch vom Kp. $_{0,1}$:34 bis 44°C, das entsprechend Beispiel 2 durch Destillation aufgetrennt wird. Der Vorlauf dieser Destillation wird in die elektrochemische Oxidation zurückgeführt. Hieraus ergibt sich eine Ausbeute von 64% der theoretischen Ausbeute an p-Methylbenzaldehyddimethylacetal vom Kp $_{20}$: 94°C.

*Beispiel 4:*

29,6 g p-(t-Butyl)toluol, gelöst in einem Elektrolyten aus 75 ml Methanol und 5 g Tetraethylammoniummethylsulfat und 1 ml Collidin, werden bei 25°C und einer Stromdichte von 10 A/dm² an einer Graphitanode bis zum Verbrauch von 0,67 F elektrolysiert. Nach dem Abdestillieren des Methanols werden 5 g ausgefallenes Leitsalz abgesaugt und 33,3 g Filtrat erhalten, das destillativ aufgetrennt wird. Man erhält einen Vorlauf, der ohne weitere Behandlung mit weiterem Ausgangsmaterial in die Elekrtolyse zurückgeführt wird, und 16 g p-(t-Butyl)benzaldehyddimethyl acetal, Kp. $_{0,1}$:65°C. Unter Berücksichtigung der Rückführung des Vorlaufs ergibt sich eine Stoffausbeute von 63% der theoretischen Ausbeute.

*Beispiel 5:*

Eine Lösung von 740 g (5 mol) p-(t-Butyl)toluol in einem Elektrolyten, bestehend aus 2000 g Methanol und 130 g Tetramethylammoniumdimethylphosphat, wird in einer Elektrolysezelle mit bipolar geschalteten Graphitelektroden bei einer Stromdichte von 8 A/dm² und einer Temperatur von 25°C bis zum Verbrauch von 16 F elektrolysiert.

Man destilliert das Methanol ab, saugt vom ausgefallenen Leitsalz ab und isoliert 581 g Vorlauf und 271 g (1,3 mol) p-(t-Butyl)benzaldehyd dimethylacetal mit einem Kp. $_{0,1}$:65°C. Es bleibt ein Rückstand von 47 g.

Der Vorlauf wird an einem Pd-Katalysator in 30%iger methanolischer Lösung bei Normaldruck und Raumtemperatur hydriert und dem Ausgangsmaterial einer folgenden Elektrolyse zugefügt. Es ergibt sich unter Berücksichtigung der Rückführung des Vorlaufs eine Ausbeute von 92% der theoretischen Ausbeute an p-(t-Butyl)benzaldehyddimethylacetal.

*Beispiel 6:*

Eine Lösung von 610 g (5 mol) p-Methoxytoluol, gelöst in 1800 g Methanol, das 100 g Tetramethylammoniumdimethylphosphat enthält, wird wie in Beispiel 5 bis zum Verbrauch von 16 F elektrolysiert. Man erhält einen Vorlauf von 237 g und 597 g Anisaldehyddimethylacetal (Kp. $_{15}$:123°C). Der Vorlauf wird dem Ausgangsmaterial der nächsten Elektrolyse zugefügt. Man errechnet unter Berücksichtigung dieser Rückführung eine Ausbeute von 95% Anisaldehyddimethylacetal.

**Patentansprüche**

1. Verfahren zur Herstellung von gegebenenfalls substituierten Benzaldehyddialkylacetalen bei dem ein substituiertes Toluol gelöst in einem Alkohol an oxidationsstabilen Anoden bei einer Stromdichte von 0,1 bis 50 $A/dm^2$ elektrochemisch oxidiert wird und das erhaltene Reaktionsgemisch aufgearbeitet wird, dadurch gekennzeichnet, dass man gegebenenfalls substituierte Toluole der Formel

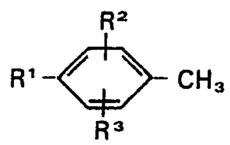

in der
$R^1$ Wasserstoff, Alkyl, Aryl, Aralkyl, Alkoxy, Aryloxy oder Aralkoxy bedeutet, und
$R^2$ und $R^3$ gleich oder verschieden sind und für Wasserstoff, Alkyl, Aryl oder Aralkyl stehen,
gelöst in einem Alkohol der Formel

$$R^4-OH$$

in der
$R^4$ Alkyl bedeutet,
und in Gegenwart eines Leitsalzes der Formel

$$R^5-A-OY,$$

in der
Y ein Alkalimetall, nicht substituiertes Ammonium oder teilweise oder ganz durch Alkyl oder Benzyl substituiertes Ammonium bedeutet,
A für $-SO_2-$ oder $-\underset{\displaystyle R^6}{\underset{|}{PO}}-$ steht,
$R^5$ für Hydroxyl, OY oder gegebenenfalls durch Alkyl und/oder Halogen substituiertes Alkyl, Aralkyl, Aryl, Alkoxy, Aralkoxy oder Aryloxy steht, und
$R^6$ für Alkoxy, Aralkoxy, Aryloxy, Hydroxyl oder OY steht,
elektrochemisch oxidiert und die entstehenden Nebenprodukte in das Ausgangsmaterial für die elektrochemische Oxidation zurückführt, wobei man die Nebenprodukte vor der Rückführung gegebenenfalls mit katalytisch angeregtem Wasserstoff behandelt.

2. Verfahren nach Anspruch 1, dadurch gekennzeichnet, dass man als Leitsalz ein Tetraalkylammoniumsalz der Formel

$$R^7-B-O-N(Alkyl)_4$$

in der
B für $-SO_2-$ oder $-\underset{\displaystyle R^8}{\underset{|}{PO}}-$ steht,
$R^7$ für Methyl, Ethyl, Methoxy, Epoxy oder gegebenenfalls durch Alkyl und/oder Halogen substituiertes Phenyl bedeutet, und
$R^8$ für Methoxy oder Ethoxy steht,
einsetzt.

3. Verfahren nach Anspruch 1, dadurch gekennzeichnet, dass man zur Aufarbeitung das Reaktionsgemisch destilliert und neben dem gewünschten Reaktionsprodukt nur eine Fraktion auffängt, die ausser den Nebenprodukten noch unverändertes Ausgangsmaterial und etwas gewünschtes Reaktionsprodukt enthält, und diese eine Fraktion unverändert in das Ausgangsmaterial für die elektrochemische Oxidation zurückführt.

4. Verfahren nach Anspruch 1 und 3, dadurch gekennzeichnet, dass man die elektrochemische Oxidation kontinuierlich durchführt, das Reaktionsgemisch im Kreislauf führt und hinter der Elektrolyseapparatur nur einen Teil des Reaktionsgemisches entnimmt und destilliert, wobei die Fraktion, die die Nebenprodukte enthält, gegebenenfalls nach Behandlung mit katalytisch angeregtem Wasserstoff in das Ausgangsmaterial für die elektrochemische Oxidation zurückgeführt wird.

5. Verfahren nach Anspruch 1 und 3, dadurch gekennzeichnet, dass man die bei der elektrochemischen Oxidation entstehenden Nebenprodukte gegebenenfalls im Gemisch mit etwas Ausgangsprodukt und etwas Hauptprodukt (a) in einem Alkohol $R^4OH$, wobei $R^4$ die in Anspruch 1 genannte Bedeutung hat, auflöst, (b) in Gegenwart eines Hydrierkatalysators bei einer Temperatur von 0°C bis zum Siedepunkt des Alkohols $R^4OH$ und bei Normaldruck oder erhöhtem Druck mit Wasserstoff behandelt und (c) danach in das Ausgangsmaterial für die elektrochemische Oxidation zurückführt.

6. Verfahren nach Anspruch 1 und 5, dadurch gekennzeichnet, dass als Lösungsmittel bei der Behandlung mit katalytisch angeregtem Wasserstoff der gleiche Alkohol verwendet wird wie bei der Durchführung der elektrochemischen Oxidation.

7. Verfahren nach Anspruch 1 und 5, dadurch gekennzeichnet, dass zur Behandlung mit katalytisch angeregtem Wasserstoff der bei der elektrochemischen Oxidation kathodisch anfallende Wasserstoff unter Normaldruck eingesetzt wird.

8. Verfahren nach Anspruch 1, dadurch gekennzeichnet, dass man die Stromdichte im Verlauf der elektrochemischen Oxidation erniedrigt.

9. Verfahren zur Herstellung von gegebenenfalls substituierten Benzaldehyden, bei welchen man das bei einer elektrochemischen Oxidation eines in einem Alkohol gelösten gegebenenfalls substituierten Toluols anfallende Reaktionsgemisch, mit einer Menge Wasser, die mindestens dem Gehalt des Reaktionsgemisches an gegebenenfalls substituiertem Benzaldehyddialkylacetal äquivalent ist, versetzt, in Gegenwart einer Säure oder eines sauren Ionenaustauschers den entsprechenden Benzaldehyd durch Hydrolyse freisetzt, das hierbei entstehende Hydrolysegemisch von der Säure beziehungsweise dem Ionenaustauscher befreit und zur Gewinnung des entsprechenden Benzaldehyds aufarbeitet, dadurch gekennzeichnet, dass das nach dem Verfahren nach Anspruch 1 anfallende Reaktionsgemisch verwendet wird.

**Claims**

1. A process for the preparation of optionally substituted benzaldehyde dialkylacetals, in which

a substituted toluene dissolved in an alcohol is electrochemically oxidized at a current density of 0.1 to 50 A/dm$^2$ using oxidation-resistant anodes and the resulting reaction mixture is worked up, characterised in that optionally substituted toluenes of the formula:

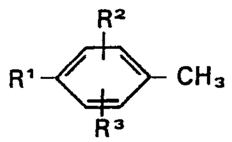

in which
$R^1$ denotes hydrogen, alkyl, aryl, aralkyl, alkoxy, aryloxy or aralkoxy, and
$R^2$ and $R^3$ are identical or different and represent hydrogen, alkyl, aryl or aralkyl,
dissolved in an alcohol of the formula:

$$R^4-OH$$

in which
$R^4$ denotes alkyl,
and in the presence of a conducting salt of the formula:

$$R^5-A-OY$$

in which
Y denotes an alkali metal, non-substituted ammonium or ammonium partially or totally substituted by alkyl or benzyl,
A represents $-SO_2$ or $-\underset{R^6}{\underset{|}{PO}}-$,
$R^5$ represents hydroxyl, OY or alkyl, aralkyl, aryl, alkoxy, aralkoxy or aryloxy optionally substituted by alkyl and/or halogen, and
$R^6$ represents alkoxy, aralkoxy, aryloxy, hydroxyl or OY,
are electrochemically oxidized and the secondary products occuring are reintroduced into the starting material for the electrochemical oxidation, the secondary products optionally being treated with catalytically activated hydrogen prior to the reintroduction.

2. A process according to claim 1, characterised in that the conducting salt used is a tetraalkyl ammonium salt of the formula:

$$R^7-B-O-N(alkyl)_4$$

in which
B represents $-SO_2$ or $-\underset{R^8}{\underset{|}{PO}}-$
$R^7$ denotes methyl, ethyl, methoxy, epoxy or phenyl optionally substituted by alkyl and/or halogen, and
$R^8$ represents methoxy or ethoxy.

3. A process according to claim 1, characterised in that the reaction mixture is worked up by being distilled and only one fraction is collected in addition to the desired reaction product, which fraction contains, apart from the secondary products, starting material still unchanged and some of the desired reaction product, and this one fraction is reintroduced unchanged into the starting material for the electrochemical oxidation.

4. A process according to claims 1 and 3, characterised in that the electrochemical oxidation is carried out continuously, the reaction mixture is cycled and only one part of the reaction mixture is removed from the rear of the electrolysis apparatus and distilled, the fraction containing the secondary products, optionally following treatment with catalytically activated hydrogen, being reintroduced into the starting material for the electrochemical oxidation.

5. A process according to claims 1 and 3, characterised in that the secondary products formed during the electrochemical reaction, optionally mixed with some starting material and some main product, a) are dissolved in an alcohol $R^4OH$, $R^4$ having the meaning given in claim 1, b) are treated with hydrogen in the presence of a hydrogenation catalyst at a temperature of 0°C to the boiling point of the alcohol $R^4OH$ and at normal pressure or at elevated pressure, and c) are then reintroduced into the starting material for the electrochemical oxidation.

6. A process according to claim 1 and 5, characterised in that the same alcohol is used as solvent during the treatment with catalytically activated hydrogen as that used in conducting the electrochemical oxidation.

7. A process according to claims 1 and 5, characterised in that for the treatment with catalytically activated hydrogen the hydrogen cathodically produced during the electrochemical oxidation is used under normal pressure.

8. A process according to claim 1, characterised in that the current density is decreased during the course of the electrochemical oxidation.

9. A process for the preparation of optionally substituted benzaldehydes in which the reaction mixture formed during the electrochemical oxidation of an optionally substituted toluene dissolved in an alcohol is mixed with a quantity of water which is at least equivalent to the content of optionally substituted benzaldehyde dialkylacetal in the reaction mixture, the corresponding benazldehyde is isolated by hydrolysis in the presence of an acid or an acid ion exchanger, the hydrolysis mixture forming from this is isolated from the acid or the ion exchanger and is worked up to obtain the corresponding benzaldehyde, characterised in that the reaction mixture obtained according to the process of claim 1 is used.

**Revendications**

1. Procédé de préparation de dialkylacétals du benzaldéhyde éventuellement substitués, dans lequel on soumet un toluène substitué en solution dans un alcool à oxydation électrochimique avec des anodes stables à l'oxydation à une densité de courant de 0,1 à 50 A/dm$^2$ et on traite le mélange de réaction obtenu, caractérisé en ce que l'on soumet des toluènes éventuellement substitués répondant à la formule:

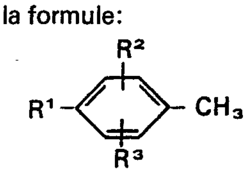

dans laquelle
$R^1$ représente l'hydrogène, un groupe alkyle, aryle, aralkyle, alcoxy, aryloxy ou aralcoxy, et
$R^2$ et $R^3$, identiques ou différents, représentent l'hydrogène, un groupe alkyle, aryle ou aralkyle, en solution dans un alcool de formule:

$$R^4-OH$$

dans laquelle
$R^4$ représente un groupe alkyle,
et en présence d'un sel conducteur de formule:

$$R^5-A-OY,$$

dans laquelle
Y représente un métal alcalin, l'ammonium non substitué ou un ammonium substitué en totalité ou en partie par des groupes alkyle ou benzyle,
A représente $-SO_2-$ ou $-PO-$,
$$\qquad\qquad |$$
$$\qquad\qquad R^6$$
$R^5$ représente un groupe hydroxy, OY ou alkyle, aralkyle, aryle, alcoxy, aralcoxy ou aryloxy éventuellement substitué par des groupes alkyle et/ou des halogènes, et
$R^6$ représente un groupe alcoxy, aralcoxy, aryloxy, hydroxy ou OY,
à oxydation électrochimique, et on recycle les produits secondaires formés dans le produit de départ de l'oxydation électrochimique, ces produits secondaires étant éventuellement traités avant le recyclage par de l'hydrogène activé par un catalyseur.

2. Procédé selon la revendication 1, caractérisé en ce que l'on utilise en tant que sel conducteur un sel de tétraalkylammonium de formule:

$$R^7-B-O-N(alkyle)_4$$

dans laquelle
B représente $-SO_2-$ ou $-PO-$,
$$\qquad\qquad |$$
$$\qquad\qquad R^8$$
$R^7$ représente un groupe méthyle, éthyle, méthoxy, époxy ou phényle portant éventuellement des substituants alkyle et/ou halogéno, et
$R^8$ représente un groupe méthoxy ou éthoxy.

3. Procédé selon la revendication 1, caractérisé en ce que, pour le traitement du mélange de réaction, on distille et, avec le produit de réaction recherché, on ne recueille qu'une fraction qui, en plus des produits secondaires, contient encore le produit de départ non converti et un peu de produit de réaction recherché, et on recycle cette fraction unique, telle quelle, dans le produit de départ de l'oxydation électrochimique.

4. Procédé selon les revendications 1 et 3, caractérisé en ce que l'on réalise l'oxydation électrochimique en continu, on recycle le mélange de réaction et, derrière l'appareil d'électrolyse, on prélève une partie seulement du mélange de réaction qu'on distille, et on recycle la fraction contenant les produits secondaires, éventuellement après traitement par l'hydrogène activé par un catalyseur, dans le produit de départ de l'oxydation électrochimique.

5. Procédé selon les revendications 1 et 3, caractérisé en ce que a) on dissout les produits secondaires formés dans l'oxydation électrochimique, éventuellement en mélange avec un peu de produit de départ et un peu du produit principal, dans un alcool $R^4OH$, $R^4$ ayant les significations indiquées dans la revendication 1, b) on traite, en présence d'un catalyseur d'hydrogénation, à une température allant de 0°C jusqu'au point d'ébullition de l'alcool $R^4OH$ et à pression normale ou sous pression par l'hydrogène, et c) on recycle le produit hydrogéné dans le produit de départ de l'oxydation électrochimique.

6. Procédé selon les revendications 1 et 5, caractérisé en ce que, pour le traitement par l'hydrogène activé par un catalyseur, on utilise comme solvant le même alcool qui sert pour la mise en œuvre de l'oxydation électrochimique.

7. Procédé selon les revendications 1 et 5, caractérisé en ce que, pour le traitement par l'hydrogène activé par un catalyseur, on utilise, sous pression normale, l'hydrogène formé à la cathode lors de l'oxydation électrochimique.

8. Procédé selon la revendication 1, caractérisé en ce que l'on diminue la densité de courant dans le cours de l'oxydation électrochimique.

9. Procédé de préparation de benzaldéhydes éventuellement substitués dans lequel, à un mélange de réaction obtenu lors d'une oxydation électrochimique d'un toluène éventuellement substitué en solution dans un alcool, on ajoute une quantité d'eau au moins équivalente à la teneur en dialkylacétal de benzaldéhyde éventuellement substitué du mélange de réaction, on libère le benzaldéhyde correspondant par hydrolyse en présence d'un acide ou d'un échangeur d'ions acide, on débarrasse le mélange d'hydrolyse obtenu de l'acide ou de l'échangeur d'ions, et on traite pour isolement du benzaldéhyde correspondant, caractérisé en ce qu'on utilise le mélange de réaction obtenu par le procédé selon la revendication 1.